(19) Europäisches Patentamt
European Patent Office
Office européen des brevets

(11) **EP 0 996 240 B1**

(12) **FASCICULE DE BREVET EUROPEEN**

(45) Date de publication et mention
de la délivrance du brevet:
**09.07.2003 Bulletin 2003/28**

(51) Int Cl.7: **H04B 7/005**

(21) Numéro de dépôt: **99402515.3**

(22) Date de dépôt: **13.10.1999**

(54) **Procédé de contrôle en boucle fermée de la puissance reçue par un récepteur et transmise d'un émetteur d'un système de télécommunications**

Methode zur Steuerung der Leistung welche in einem Telekommunikationssystem von einem Empfänger empfangen und von einem Sender gesendet wird, mit einem geschlossenen Regelkreis

Method of closed loop control of the power received by a receiver and transmitted by a transmitter of a telecommunication system

(84) Etats contractants désignés:
**DE ES FR GB IT**

(30) Priorité: **16.10.1998 FR 9813051**

(43) Date de publication de la demande:
**26.04.2000 Bulletin 2000/17**

(73) Titulaire: **Mitsubishi Electric Information Technology Centre Europe B.V.
1119 NS Schiphol Rijk (NL)**

(72) Inventeurs:
• **Voyer, Nicolas
35700 Rennes (FR)**
• **Mottier, David
35700 Rennes (FR)**

(74) Mandataire: **Maillet, Alain
SCP Le Guen & Maillet,
5, Place Newquay,
B.P. 70250
35802 Dinard Cedex (FR)**

(56) Documents cités:
**EP-A- 0 810 743**

• **TANSKANEN J M A ET AL: "PREDICTION OF RECEIVED SIGNAL POWER IN CDMA CELLULAR SYSTEMS" PROCEEDINGS OF THE VEHICULAR TECHNOLOGY CONFERENCE, CHICAGO, JULY 25 - 28, 1995, vol. 2, no. CONF. 45, 25 juillet 1995 (1995-07-25), pages 922-926, XP000551669 INSTITUTE OF ELECTRICAL AND ELECTRONICS ENGINEERS**
• **SHEN Q ET AL: "PERFORMANCE IMPROVEMENT OF CLOSED-LOOP POWER CONTROL IN CDMA CELLULAR MOBILE COMMUNICATION SYSTEMS" 1996 IEEE 46TH. VEHICULAR TECHNOLOGY CONFERENCE, MOBILE TECHNOLOGY FOR THE HUMAN RACE ATLANTA, APR. 28 - MAY 1, 1996, vol. 1, no. CONF. 46, 28 avril 1996 (1996-04-28), pages 56-60, XP000594279 INSTITUTE OF ELECTRICAL AND ELECTRONICS ENGINEERS**
• **ZHENGMAO L ET AL: "THE ESTIMATIOON OF CDMA PERSONAL SYSTEM WITH FEEDBACK POWER CONTROL" 1995 FOURTH IEEE INTERNATIONAL CONFERENCE ON UNIVERSAL PERSONAL COMMUNICATIONS RECORD, GATEWAY TO THE 21ST. CENTURY TOKYO, NOV. 6 - 10, 1995, no. CONF. 4, 6 novembre 1995 (1995-11-06), pages 344-347, XP000689970 INSTITUTE OF ELECTRICAL AND ELECTRONICS ENGINEERS**

## Description

La présente invention concerne un procédé de contrôle en boucle fermée de la puissance reçue par un récepteur et transmise d'un émetteur d'un système de télécommunications. Par exemple, le système de télécommunication est un système de téléphonie sans fil constitué d'une pluralité de stations de base prévues pour communiquer, par voie hertzienne, avec des téléphones mobiles. Plus exactement, le système de transmission entre les stations de base et les téléphones mobiles utilisent des techniques de modulation à étalement de spectre, par exemple les techniques dites à accès multiple par répartition de codes dites aussi CDMA.

Dans de tels systèmes de transmission, le contrôle de la puissance est utilisé pour compenser les fluctuations de la puissance du signal reçu par le récepteur (par exemple du téléphone mobile) dues, au rapprochement ou au contraire à l'éloignement du téléphone mobile en mouvement, à des phénomènes d'ombrage lorsque le téléphone mobile se trouve sous un pont ou à l'ombre d'un immeuble, à des phénomènes d'évanouissement rapide dû aux interférences créées par différents trajets du même signal, etc.

On notera que les variations de puissance introduites par ces différents phénomènes sont plus ou moins rapides avec le temps, selon, d'une part, le phénomène considéré et, d'autre part, la vitesse de déplacement du téléphone mobile par rapport à la station de base avec laquelle il est en communication.

On notera encore que le procédé de l'invention peut également s'appliquer pour le contrôle de puissance de l'émetteur soit d'un téléphone mobile, soit d'une station de base.

Parmi les systèmes de contrôle de puissance, celui qui fait l'objet de la présente invention est celui qui est en boucle fermée. Selon un tel système, le récepteur reçoit le signal émis par l'émetteur et compare sa puissance à un seuil prédéterminé. Un signal est engendré à l'issu de cette comparaison, puis transmis à l'émetteur pour que ce dernier augmente ou diminue sa puissance d'émission. Avant transmission à l'émetteur, ce signal est quantifié, généralement mais pas nécessairement à un bit. A un, ce bit signifie par exemple une augmentation de puissance de $y$ décibels et, à zéro, il signifie un diminution de puissance équivalente. L'excursion de puissance émise par l'émetteur est par ailleurs limitée. Typiquement, la variation de puissance $y$ est de $\pm$ 1 dB et l'excursion de puissance est de $\pm$ 40 dB.

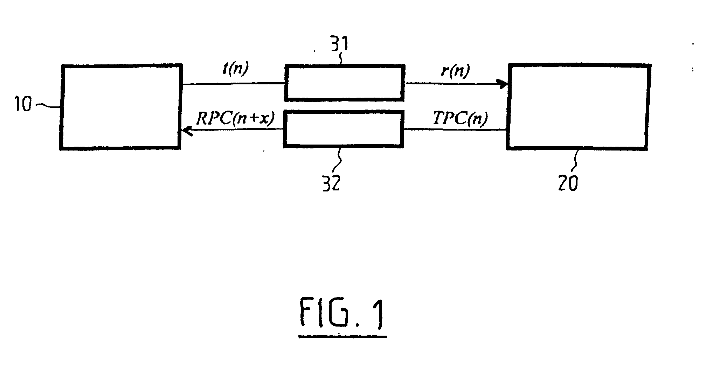

De manière générale, un système de télécommunication tel que celui qui est visible à la Fig. 1 est généralement constitué d'un émetteur 10 qui émet des signaux à destination d'un récepteur 20 et, ce, via un canal aller 31. Des informations de contrôle sont également transmises du récepteur 20 à l'émetteur 10 et, ce, via un canal retour 32.

Comme cela a été expliqué ci-dessus, le canal aller 31 est le siège de phénomènes de changement de la qualité du signal émis par l'émetteur 10. Ces phénomènes sont notamment responsables d'une atténuation de la puissance reçue par le récepteur 20. Le contrôle de puissance consiste donc à contrôler la puissance d'émission de l'émetteur 10 de manière que la puissance reçue par le récepteur 20 soit à un niveau désiré optimum.

A la Fig. 1, l'émetteur 10, dans une fenêtre de temps d'indice $n$, émet un signal de puissance $t(n)$. Dans le canal aller 31, ce signal subit une atténuation $c(n)$ qui varie avec le temps. Le récepteur 20 reçoit ainsi un signal dont la puissance $r(n)$ est donnée par la relation suivante :

$$r(n) = t(n) \cdot c(n)$$

Dans la suite de la description, on utilisera des majuscules pour désigner des grandeurs de puissance exprimées en décibels. Ainsi, la relation précédente peut s'écrire :

$$R(n) = T(n) + C(n)$$

Le récepteur 20, sur la base de la puissance du signal reçu, élabore un signal de contrôle $TCP(n)$ qui est alors transmis, via le canal retour 32, à l'émetteur 10. Le signal de contrôle $TPC(n)$ qui est généralement à valeur discrète correspond au nombre de décibels dont le récepteur 20 a estimé qu'il fallait augmenter ou diminuer le signal de puissance $t(n)$ émis par l'émetteur 10 pour que la puissance qu'il reçoit soit la plus proche possible d'une puissance requise notée $R_{req}$. La valeur de cette puissance peut être constante avec le temps ou est, par exemple, fixée par le système à un instant donné, selon les conditions de transmission ou le service envisagé.

Le canal retour 32, outre un retard $x$, perturbe le signal de contrôle émis par le récepteur 20 si bien que le signal de contrôle reçu par l'émetteur 10 est $RPC(n + x)$.

Enfin, l'émetteur 10 prend en compte le signal de contrôle $RPC(n+x)$ au temps $(n + x)$ et change sa puissance d'émission $t(n+x)$ en conséquence. Ainsi, l'émetteur 10, à l'émission de la fenêtre de temps d'indice $(n+x)$ tient compte de la puissance émise à la fenêtre de temps précédente $T(n+x-1)$ et du signal de commande de puissance $RPC(n+x)$ correspondant à la commande $TPC(n)$ envoyée $x$ fenêtres de temps plus tôt. On a donc la relation suivante :

$$T(n+x) = T(n+x-1) + RPC(n+x)$$

Dans les systèmes connus, pour élaborer le signal de commande de puissance $TPC(n)$, le récepteur 20 calcule la différence entre la puissance requise $R_{req}$

et la puissance qu'il a effectivement reçue $R(n)$. Cette différence est ensuite quantifiée sur un nombre $Q$ de bits et constitue ainsi le signal de commande de puissance $TPC(n)$.

Par exemple, en utilisant un seul bit de quantification ($Q = 1$), on aura :

$$\text{si } R(n) > R_{req}, \; TPC(n) = -y \text{ dB}$$

$$\text{si } R(n) < R_{req}, \; TPC(n) = +y \text{ dB}$$

où $y$ est un niveau de variation de puissance prédéterminé.

La valeur attribuée au signal de commande $TPC(n)$ correspond donc au nombre de décibels dont la puissance émise $T(n+x)$ doit être augmentée ou diminuée pour que la puissance reçue $R(n)$ tende vers la valeur $R_{req}$. Cette méthode est connue pour faire converger la puissance reçue $R(n)$ par le récepteur 20 autour de la puissance requise $R_{req}$ (aux oscillations d'amplitude +/- $y$ dB près) pour des canaux dont l'atténuation évolue faiblement avec le temps, par exemple du fait que l'émetteur se déplace à basse vitesse.

Pour limiter les oscillations de puissance reçue autour de la valeur requise $R_{req}$, on peut utiliser généralement de plus faibles valeurs du niveau de variation de puissance $y$. Néanmoins, la puissance reçue converge alors moins bien, en particulier pour un canal dont l'atténuation évolue plus vite avec le temps.

Pour résoudre ce problème, une solution pourrait consister à quantifier la différence entre la puissance requise $R_{req}$ et la puissance reçue $R(n)$ sur un plus grand nombre de bits apportant ainsi à la valeur du signal de commande $TPC(n)$ une meilleure résolution. Cependant, un telle méthode n'est pas adéquate car le nombre de bits à transmettre sur le canal retour 32 est généralement sévèrement limité.

De manière générale, la méthode exposée ci-dessus est excellente quand il s'agit de compenser une atténuation de puissance $c(n)$ du canal aller 31 qui varie faiblement au cours du temps, par exemple parce que l'émetteur 10 se déplace à relativement faible vitesse. Mais pour compenser des atténuations du canal plus rapides, soit parce que l'émetteur se déplace plus rapidement, soit parce que le canal est l'objet d'interférences de Rayleigh, cette méthode s'avère dans les faits inefficace.

On a déjà tenté de compenser non seulement la partie continue du rapport entre $R(n)$ et $R_{req}$ mais également la partie dynamique de ce rapport, au moyen d'un filtre prédictif polynomial (généralement long). Pour ce faire, le récepteur 20 calcule le signal de commande $TPC(n)$ comme précédemment mais en remplaçant la puissance reçue $R(n)$ à la fenêtre de temps $n$ par une estimation de cette puissance $R(n+x)$ à la fenêtre de temps $(n + x)$. Généralement, cette méthode supporte des canaux à évolutions plus rapides que la méthode classique présentée ci-dessus mais n'est pas encore satisfaisante.

En effet, faire une prédiction polynomiale de l'évolution de la puissance reçue $R(n)$ peut s'avérer inadéquat car elle varie de manière discontinue, en raison des variations brutales de la puissance $T(n)$ émises par l'émetteur 10 dues à la présence même du contrôle de puissance. Par ailleurs, les filtres utilisés sont longs (typiquement d'une dizaine de coefficients) ce qui complexifie la mise en oeuvre de cette solution. Ils entraînent également une consommation excessive des récepteurs.

De plus, on a pu constater que le traitement linéaire du contrôle de puissance est inadapté à une évolution de l'atténuation des canaux pour des téléphones mobiles dont les évanouissements suivent typiquement une loi log-normale.

Le but de la présente invention est donc de proposer un dispositif de contrôle de puissance en boucle fermée qui permette de résoudre les problèmes soulevés ci-dessus.

A cet effet, un procédé de contrôle de puissance selon l'invention est caractérisé en ce que, pour déterminer le signal de commande, il consiste en outre à déterminer la variation de puissance dynamique due au canal aller en effectuant une prédiction de la variation de la réponse du canal entre l'instant courant et l'instant correspondant au temps de la prise en compte du signal de commande par l'émetteur.

Selon une autre caractéristique de l'invention, pour l'estimation de la variation de la réponse du canal, il consiste à utiliser les valeurs prises successivement pour un certain nombre de fenêtres de temps précédentes par un signal d'estimation de l'atténuation du canal aller.

Avantageusement, la valeur de l'estimation de la variation de la réponse du canal $\Delta C'(n+x)$ est donnée par la relation suivante :

$$\Delta C'(n+x) = g(z,x) \; C'(n)$$

où $g(z,x)$ est la réponse d'un filtre prédictif correspondant à un rang futur $x$, $x$ étant le retard mis par l'émetteur pour prendre en compte ledit signal de commande. Ladite réponse est préférentiellement donnée par un polynôme d'ordre 2, par exemple :

$$g(z,x) = (x^2+3x)/2 - (x^2+2x) \; z^{-1} + (x^2+x)z^{-2}/2$$

Avantageusement, pour déterminer le signal d'estimation de l'atténuation du canal aller, il consiste à utiliser, d'une part, la puissance reçue et, d'autre part, une estimation de la puissance émise par l'émetteur à l'instant courant.

Avantageusement, pour déterminer une estimation de la puissance émise par l'émetteur à l'instant courant, il consiste à effectuer une estimation du signal de commande reçu par l'émetteur à l'instant courant, puis à additionner à l'estimation de la puissance émise à l'instant précédent ladite estimation du signal de commande.

Avantageusement, pour déterminer l'estimation du signal de commande, il consiste à retarder le signal de commande d'une durée correspondant au retard mis par l'émetteur pour prendre en compte ledit signal de commande.

Avantageusement, pour déterminer le signal de commande, il consiste en outre à déterminer la variation du signal de commande de puissance entre l'instant courant et l'instant de prise en compte par l'émetteur d'un signal transmis à l'instant courant.

Selon une autre caractéristique de l'invention, il consiste à déterminer le signal de commande de puissance par une somme pondérée de la variation statique de puissance reçue, de la variation de puissance dynamique due au canal aller et de la variation du signal de commande de puissance. Les coefficients de pondération de ladite somme pondérée ont par exemple des valeurs qui dépendent des caractéristiques de transmission.

Selon une autre caractéristique de l'invention, il consiste à convertir la valeur de la puissance reçue en sa valeur en décibels, les différents calculs étant alors faits avec des valeurs exprimées en décibels.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 est un schéma synoptique d'un système de télécommunication qui est adapté à la mise en oeuvre d'un procédé selon la présente invention,
la Fig. 2 est un schéma synoptique de la partie concernant le contrôle de puissance d'un récepteur mettant en oeuvre un procédé selon l'invention,
la Fig. 3 est un schéma synoptique d'une unité de détermination du signal de commande d'un récepteur mettant en oeuvre un procédé selon l'invention, et
la Fig. 4 est un schéma synoptique d'une unité d'estimation d'un récepteur mettant en oeuvre un procédé selon l'invention.

Dans la suite de la description, on sera amené à utiliser la transformée en $z$. On rappelle que la transformée en $z$ d'un signal prenant respectivement pendant des fenêtres de temps $\{0, 1, ..., n, ...\}$ les valeurs $\{f(0), f(1), ..., f(n), ...\}$ est la fonction suivante du nombre complexe $z$ :

$$F(z) = f(0) + \frac{f(1)}{z} + ... + \frac{f(n)}{z^n} + ...$$

On rappelle que la fonction retard de $x$ fenêtres de temps a pour transformée en $z$ la fonction $1/z^x = z^{-x}$.

Ces rappels étant faits, on précise d'abord que la mise en oeuvre de la présente invention diffère de celle de l'état de la technique par le traitement qui est opéré dans le récepteur 20. Aussi, on ne s'intéressera maintenant qu'au récepteur 20 étant entendu que la structure générale du système est celle qui est représentée à la Fig. 1.

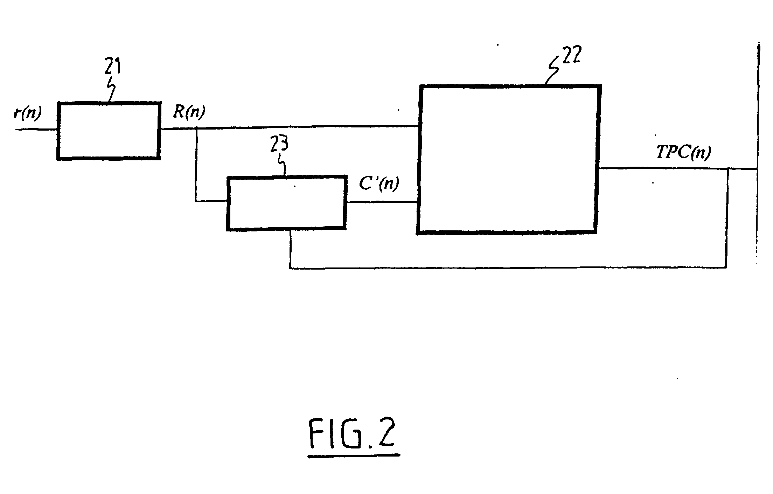

Le récepteur représenté schématiquement à la Fig. 2 est essentiellement constitué d'une unité de conversion 21 dont l'entrée est prévue pour recevoir le signal de puissance $r(n)$ émis par un émetteur 10 et dont la sortie est reliée, d'une part, à l'entrée d'une unité 22 de détermination du signal de commande $TPC(n)$ qu'elle délivre sur sa sortie et, d'autre part, à une première entrée d'une unité d'estimation 23. Une seconde entrée de l'unité d'estimation 23 est prévue pour recevoir le signal de commande $TPC(n)$ alors que sa sortie est reliée à une seconde entrée de l'unité de détermination 22.

L'unité de conversion 21 est prévue pour assurer la conversion du signal de puissance $r(n)$ en sa valeur exprimée en décibels $R(n)$.

L'unité d'estimation 23 est prévue pour effectuer une estimation $C'(n)$ de la réponse du canal $C(n)$ et ce, à partir, d'une part, de la puissance $R(n)$ reçue et, d'autre part, des valeurs $TPC(i)$ avec $i < n$ précédemment prises par le signal de commande $TPC(n)$.

Quant à l'unité de détermination 22, elle est prévue pour élaborer le signal de commande $TPC(n)$ sur la base de la valeur de puissance reçue $R(n)$ et de la valeur de l'estimation notée $C'(n)$ de l'atténuation $C(n)$ du canal aller 31. On rappelle que, si $t(n)$ est la puissance émise par l'émetteur 10 et $r(n)$ est la puissance reçue par le récepteur 20, l'atténuation $c(n)$ est définie comme le rapport $r(n)/t(n)$ qui exprimé en décibels s'écrit :

$$C(n) = R(n) - T(n).$$

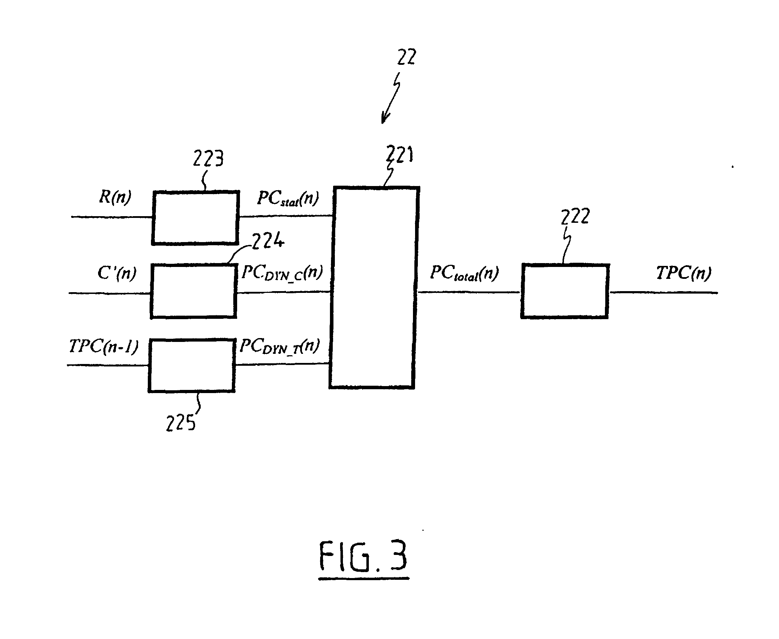

L'unité de détermination 22 représentée à la Fig. 3 est essentiellement constituée d'une unité de contrôle de puissance 221 qui délivre un signal de commande de puissance $PC_{total}(n)$, lequel est quantifié dans une unité de quantification 222 pour former le signal de commande $TPC(n)$. Ce dernier signal peut être constitué d'un ou plusieurs bits.

Elle comprend encore une unité 223 de détermination de la variation statique de la puissance reçue $PC_{STAT}(n)$, une unité 224 de détermination de la variation dynamique $PC_{DYN\_C}(n)$ de puissance due au canal aller 31 et une unité 225 de détermination de la variation dynamique $PC_{DYN\_T}(n)$ de puissance due aux commandes de contrôle de puissance passées.

Le signal $PC_{STAT}(n)$ d'évaluation de la variation statique de puissance est déterminé, par l'unité 223, en effectuant la différence entre la puissance requise $R_{req}$ et la puissance reçue $R(n)$. On a donc :

$$PC_{STAT}(n) = R_{req} - R(n)$$

Le signal $PC_{DYN\_C}(n)$ d'évaluation de l'écart de puissance dynamique dû au canal aller 31 est déterminé, par l'unité 224, en effectuant une prédiction de la variation de la réponse du canal $\Delta C'(n+x) = C'(n+x) - C'(n)$ entre l'instant courant $n$ et l'instant $n+x$ correspondant au temps de la prise en compte du signal de commande $TPC(n)$ par l'émetteur 10.

Le signal de commande $PC_{DYN\_C}(n)$ permet de compenser cette variation de réponse. Sa valeur est donc égale à l'opposé de cette variation, soit :

$$PC_{DYN\_C}(n) = - \Delta C'(n+x)$$

Pour l'estimation de la variation de la réponse du canal $\Delta C'(n+x)$, on utilise les valeurs prises successivement pour un certain nombre de fenêtres précédentes par un signal d'estimation noté $C'(n)$ de l'atténuation du canal aller 31. Ce dernier signal $C'(n)$ est délivré par des moyens dont un mode de réalisation préférentiel est décrit ci-après. En conséquence, pour l'estimation ci-dessus, on utilise les valeurs $C'(n)$, $C'(n-1)$ et $C'(n-2)$, etc.

Au moyen de la notation en $z$ rappelée ci-dessus, la valeur de l'estimation de la variation de la réponse du canal $\Delta C'(n+x)$ est donnée par la relation suivante :

$$\Delta C'(n+x) = g(z,x)C'(n)$$

où $g(z,x)$ est la réponse d'un filtre prédictif correspondant à un rang futur $x$. Cette réponse est, dans un exemple de réalisation préférée, donnée par un polynôme d'ordre 2, tel que :

$$g(z) = (x^2+3x)/2 - (x^2+2x)z^{-1} + (x^2+x)z^{-2}/2$$

A titre d'exemple, dans le cas où le retard occasionné par le canal retour 32 est $x=2$ (soit 2 unités de fenêtre de temps), on a :

$$PC_{DYN\_C}(n) = -5C'(n) + 8C'(n-1) - 3C'(n-2)$$

Le signal $PC_{DYN\_T}(n)$ d'évaluation de l'écart dynamique de puissance dû aux commandes de contrôle de puissance passées déterminé par l'unité 225 a pour valeur la valeur opposée de la variation de la puissance transmise, soit :

$$PC_{DYN\_T} = - \Delta T(n+x)$$

Cette variation $\Delta T(n+x)$ de puissance transmise entre la fenêtre de temps courante et la fenêtre retardée de $x$ est déterminée par la relation suivante :

$$\Delta T(n+x) = TPC(n-1) + .. + TPC(n-x+1)$$

On notera que les $x-1$ signaux de commande déjà transmis par le récepteur 20 mais qui n'ont pas encore été pris en compte par l'émetteur 10, du fait du retard occasionné dans le canal retour 32, ont des valeurs qui sont connues par le récepteur 20 lui-même. Ainsi, le comportement de l'émetteur 10 est prévisible (il obéit aux signaux de commande), aux erreurs près de transmission sur le canal retour 32.

Exprimé au moyen de la notation en $z$, le signal $PC_{DYN\_T}(n)$ peut être calculé par la relation suivante :

$$PC_{DYN\_T} = -h(z)\, TPC(n-1)$$

avec

$$h(z) = \sum_{j=0}^{2-x} z^{-j} \quad x \geq 2$$

Le signal $PC_{total}(n)$ de contrôle de puissance est avantageusement défini, dans l'unité 22, comme une combinaison linéaire des signaux de commande statique et dynamique. On a ainsi :

$$PC(n) = \alpha.PC_{STAT}(n) + \beta.PC_{DYN\_C(n)} + \gamma.PC_{DYN\_T}(n)$$

où $\alpha,\beta,\gamma$ sont des coefficients permettant de pondérer chacun des signaux particuliers selon la situation. Ces paramètres $\alpha,\beta,\gamma$ peuvent être fixes, mais ils peuvent également dépendre des caractéristiques de transmission telles que la vitesse de déplacement de l'émetteur 10, l'environnement de la transmission, le service utilisé, etc. On notera que ces caractéristiques peuvent être estimées, par ailleurs. Par exemple, à très basse vitesse, on peut privilégier le terme statique $\alpha$ , alors que pour les vitesses plus élevées, on peut privilégier le terme $\beta$ permettant de mieux suivre les variations de comportement du canal aller 31.

Le contrôle de puissance effectué par le procédé de l'invention permet donc de compenser deux types de variations de puissance : la variation statique et la variation dynamique. La variation statique est la différence entre la puissance reçue $R(n)$ et la puissance requise $R_{req}$. Elle peut, par exemple, être provoquée par les variations dans le passé du canal aller 31. Quant à la variation dynamique, elle est celle que le récepteur prévoit d'observer dans le futur, à l'instant correspondant à la prise en compte du signal de commande de puissance que l'on essaye de déterminer. Le récepteur 20 peut en effet s'attendre à deux types de variations dynamiques : l'une est due aux variations du canal, variations qui peuvent être prédites grâce à un filtre prédictif ; l'autre est due aux variations de puissance de transmission dues aux commandes de contrôle de puissance passées.

Le récepteur représenté schématiquement à la Fig. 2 est essentiellement constitué d'une unité de conversion 21 dont l'entrée est prévue pour recevoir le signal de puissance $r(n)$ émis par un émetteur 10 et dont la sortie est reliée, d'une part, à l'entrée d'une unité 22 de détermination du signal de commande $TPC(n)$ qu'elle délivre sur sa sortie et, d'autre part, à une première entrée d'une unité d'estimation 23. Une seconde entrée de l'unité d'estimation 23 est prévue pour recevoir le signal de commande $TPC(n)$ alors que sa sortie est reliée à une seconde entrée de l'unité de détermination 22

L'unité de conversion 21 est prévue pour assurer la conversion du signal de puissance $r(n)$ en sa valeur exprimée en décibels $R(n)$. L'unité d'estimation 23 est prévue pour effectuer une estimation $C'(n)$ de la réponse du canal $C(n)$ et ce, à partir, d'une part, de la puissance $R(n)$ reçue et, d'autre part, des valeurs $TPC(i)$ avec $i<n$ précédemment prises par le signal de commande $TPC(n)$. Enfin, l'unité de détermination 22 est conforme à l'unité qui est représentée à la Fig. 2. On rappelle qu'elle permet de déterminer, sur la base de la valeur de puissance $R(n)$ et de la valeur de l'estimation $C'(n)$ la valeur du signal de commande $TPC(n)$.

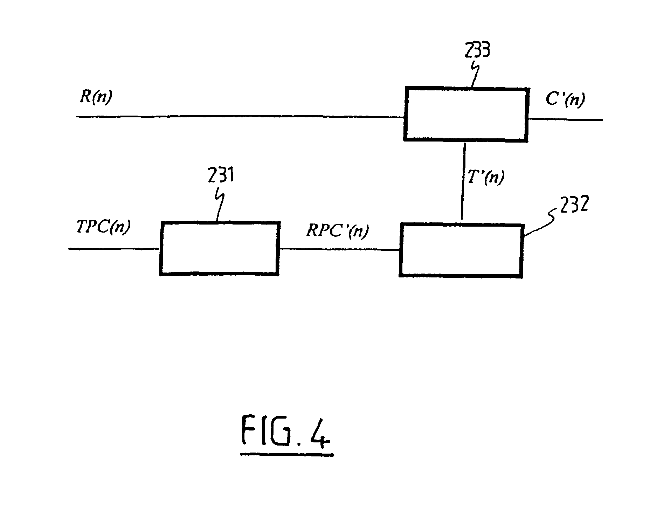

A la Fig. 4, on a représenté un mode avantageux de réalisation de l'unité d'estimation 23. Cette unité d'estimation 23 est alors constituée d'une unité de retard 231 dont l'entrée reçoit le signal de commande $TPC(n)$ et dont la sortie est reliée à l'entrée d'une unité 232 de détermination de la puissance émise par l'émetteur 10. La sortie de l'unité 232 est reliée à une première entrée d'une unité de soustraction 233 dont la première entrée reçoit le signal de puissance $R(n)$ et dont la sortie délivre le signal d'estimation $C'(n)$.

L'unité de retard 231 induit sur le signal de commande $TPC(n)$ un retard x qui correspond à celui qu'engendre le canal retour 32 (voir Fig. 1). On peut constater que le signal délivré par l'unité de retard 231 est une estimation notée $RPC'(n)$ du signal de contrôle de puissance reçu par l'émetteur 10 à l'instant de la fenêtre de temps $n$ mais qui a été émis par le récepteur 20 x fenêtres de temps avant. On peut donc écrire :

$$RPC'(n) = TPC(n-x)$$

L'unité 232 permet de déterminer une estimation, notée $T'(n)$, de la puissance émise par l'émetteur 10 à l'instant de la fenêtre de temps $n$. On rappelle que l'émetteur 10, à l'instant de la fenêtre de temps $n$, reçoit le signal de commande $RPC(n)$ et détermine la puissance nouvellement émise $T(n)$ en additionnant la puissance précédente $T(n-1)$ au signal de commande $RPC(n)$. On a donc :

$$T(n) = T(n-1) + RPC(n)$$

L'unité 232 simule le fonctionnement de l'émetteur 10 et détermine donc, à l'instant de la fenêtre de temps $n$, une estimation de la puissance nouvellement émise $T'(n)$ en additionnant la puissance précédente $T'(n-1)$ à l'estimation du signal de commande $RPC'(n)$. On a donc :

$$T'(n) = T'(n-1) + RPC'(n)$$

Quant à l'unité 233, elle effectue le calcul suivant :

$$C'(n) = R(n) - T'(n).$$

## Revendications

1. Procédé de contrôle en boucle fermée de la puissance reçue par un récepteur et transmise, via un canal aller, d'un émetteur d'un système de télécommunications, procédé consistant à recevoir le signal émis par l'émetteur, à déterminer la variation statique de puissance reçue à partir de la puissance du signal reçu et de la puissance requise et à engendrer un signal de commande qui est alors transmis à l'émetteur pour que, selon le cas, il augmente ou diminue sa puissance d'émission, **caractérisé en ce que**, pour déterminer le signal de commande, il consiste en outre à déterminer la variation de puissance dynamique due au canal aller en effectuant une prédiction de la variation de la réponse du canal entre l'instant courant et l'instant correspondant au temps de la prise en compte du signal de commande par l'émetteur.

2. Procédé selon la revendication 1, **caractérisé en ce que**, pour l'estimation de la variation de la réponse du canal, il consiste à utiliser les valeurs prises successivement pour un certain nombre de fenêtres de temps précédentes par un signal d'estimation de l'atténuation du canal aller.

3. Procédé selon la revendication 2, **caractérisé en ce que** la valeur de l'estimation de la variation de la réponse du canal $\Delta C'(n+x)$ est donnée par la relation suivante :

$$\Delta C'(n-x) = g(z,x) \; C'(n)$$

où $g(z,x)$ est la réponse d'un filtre prédictif correspondant à un rang futur $x$, $x$ étant le retard mis par l'émetteur pour prendre en compte ledit signal de commande.

4. Procédé selon la revendication 3, **caractérisé en ce que** ladite réponse est donnée par un polynôme d'ordre 2, par exemple

$$g(z,x) = (x^2+3x)/2 - (x^2+2x) \; z^{-1} + (x^2+x)z^{-2}/2.$$

5. Procédé selon une des revendications 2 à 4, **caractérisé en ce que**, pour déterminer le signal d'estimation de l'atténuation du canal aller, il consiste à utiliser, d'une part, la puissance reçue et, d'autre part, une estimation de la puissance émise par l'émetteur à l'instant courant.

6. Procédé selon la revendication 5, **caractérisé en ce que**, pour déterminer une estimation de la puissance émise par l'émetteur à l'instant courant, il consiste à effectuer une estimation du signal de commande reçu par l'émetteur à l'instant courant, puis à additionner à l'estimation de la puissance émise à l'instant précédent ladite estimation du signal de commande.

7. Procédé selon la revendication 6, **caractérisé en ce que**, pour déterminer l'estimation du signal de commande, il consiste à retarder le signal de commande d'une durée correspondant au retard mis par l'émetteur pour prendre en compte ledit signal de commande.

8. Procédé selon une des revendications précédentes, **caractérisé en ce que**, pour déterminer le signal de commande, il consiste en outre à déterminer la variation du signal de commande de puissance entre l'instant courant et l'instant de prise en compte par l'émetteur d'un signal transmis à l'instant courant.

9. Procédé selon la revendication 8, **caractérisé en ce qu'**il consiste à déterminer le signal de commande de puissance par une somme pondérée de la variation statique de puissance reçue, de la variation de puissance dynamique due au canal aller et de la variation du signal de commande de puissance.

10. Procédé selon la revendication 9, **caractérisé en**

ce que les coefficients de pondération de ladite somme pondérée ont des valeurs qui dépendent des caractéristiques de transmission.

11. Procédé selon une des revendications précédentes, **caractérisé en ce qu'**il consiste à convertir la valeur de la puissance reçue en sa valeur en décibels, les différents calculs étant alors faits avec des valeurs exprimées en décibels.

**Patentansprüche**

1. Verfahren zur Steuerung in einem geschlossenen Regelkreis der Leistung, die durch einen Empfänger empfangen und von einem Sender eines Telekommunikationssystems über einen Vorwärtskanal übertragen wird, wobei das Verfahren darin besteht, das durch den Sender gesendete Signal zu empfangen, die statische Empfangsleistungsveränderung von der Leistung des empfangenen Signals und der erforderlichen Leistung aus zu bestimmen und ein Steuersignal zu erzeugen, das dann an den Sender übertragen wird, damit er je nach Bedarf seine Sendeleistung erhöht oder verringert, **dadurch gekennzeichnet, dass** es zur Bestimmung des Steuersignals außerdem darin besteht, die von dem Vorwärtskanal herrührende dynamische Leistungsveränderung zu bestimmen, indem eine Voraussage der Kanalantwortveränderung zwischen dem derzeitigen Zeitpunkt und dem Zeitpunkt, der dem Zeitpunkt der Berücksichtigung des Steuersignals durch den Sender entspricht, ausgeführt wird.

2. Verfahren gemäß Anspruch 1, **dadurch gekennzeichnet, dass** es für die Schätzung der Kanalantwortveränderung darin besteht, die Werte zu verwenden, die nacheinander von einem Signal zur Schätzung der Vorwärtskanaldämpfung für eine gewisse Anzahl von vorhergehenden Zeitfenstern genommen werden.

3. Verfahren gemäß Anspruch 2, **dadurch gekennzeichnet, dass** der Wert zur Schätzung der Veränderung der Kanalantwort (C'(n+x) durch folgende Beziehung gegeben ist:

$$\Delta C'(n+x) = g(z,x)C'(n),$$

wobei g(z,x) die Antwort eines Prädiktionsfilters ist, das einem späteren Rang x entspricht, wobei x die Verzögerung ist, die der Sender benötigt, um das Steuersignal zu berücksichtigen.

4. Verfahren gemäß Anspruch 3, **dadurch gekennzeichnet, dass** die Antwort durch ein Polynom zweiten Grades gegeben ist, wie z.B.durch:

$$g(z,x) = (x^2+3x)/2 - (x^2+2x)z^{-3} +(x^2+x)z^{-2}/2.$$

5. Verfahren gemäß einem der Ansprüche 2 bis 4, **dadurch gekennzeichnet, dass** es zum Bestimmen des Signals zur Schätzung der Vorwärtskanaldämpfung darin besteht, einerseits die empfangene Leistung und andererseits eine Schätzung der durch den Sender zum derzeitigen Zeitpunkt gesendeten Leistung zu verwenden.

6. Verfahren gemäß Anspruch 5, **dadurch gekennzeichnet, dass** es zum Bestimmen einer Schätzung der von dem Sender zum derzeitigen Zeitpunkt gesendeten Leistung darin besteht, eine Schätzung des Steuersignals auszuführen, das von dem Sender zum derzeitigen Zeitpunkt empfangen wird, und dann die Schätzung des Steuersignals zu der Schätzung der zum vorherigen Zeitpunkt gesendeten Leistung zu addieren.

7. Verfahren gemäß Anspruch 6, **dadurch gekennzeichnet**, das es zum Bestimmen der Steuersignalschätzung darin besteht, das Steuersignal um eine Dauer zu verzögern, die der Verzögerung entspricht, die der Sender benötigt, um das Steuersignal zu berücksichtigen.

8. Verfahren gemäß einem der vorhergehenden Ansprüche, **dadurch gekennzeichnet**, das es zum Bestimmen des Steuersignals darin besteht, außerdem die Veränderung des Leistungssteuersignals zwischen dem derzeitigen Zeitpunkt und dem Zeitpunkt, zu dem der Sender ein zum derzeitigen Zeitpunkt übertragenes Signal berücksichtigt, zu bestimmen.

9. Verfahren gemäß Anspruch 8, **dadurch gekennzeichnet, dass** es darin besteht, das Leistungssteuersignal durch eine gewichtete Summe der statischen Empfangsleistungsveränderung, der von dem Vorwärtskanal herrührenden dynamischen Leistungsveränderung und der Veränderung des Leistungssteuersignals zu bestimmen.

10. Verfahren gemäß Anspruch 9, **dadurch gekennzeichnet, dass** die Gewichtungskoeffizienten der gewichteten Summe Werte aufweisen, die von den Übertragungsmerkmalen abhängig sind.

11. Verfahren nach einem der vorhergehenden Ansprüche, **dadurch gekennzeichnet, dass** es darin besteht, den Wert der empfangenen Leistung in seinen Dezibel-Wert umzusetzen, wobei die verschiedenen Berechnungen dann mit den in Dezibel ausgedrückten Werten erfolgen.

**Claims**

1. Method for closed loop control of the power received by a receiver and transmitted, via a forward channel, from a transmitter of a telecommunication system, the said method consisting of receiving the signal emitted by the transmitter, determining the static variation in received power from the power of the received signal and from the required power and generating a control signal which is then transmitted to the transmitter so that, as the case may be, it increases or decreases its emitting power, **characterised in that**, for determining the control signal, it also consists of determining the dynamic power variation due to the forward channel by making a prediction of the variation in the channel response between the current instant and the instant corresponding to the time at which the control signal is taken into account by the transmitter.

2. Method according to Claim 1, **characterised in that**, for estimating the variation in the channel response, it consists of using the values taken successively for a certain number of preceding time windows by a signal estimating the attenuation of the forward channel.

3. Method according to Claim 2, **characterised in that** the value of the estimate of the variation in the channel response $\Delta C'(n+x)$ is given by the following relationship:

$$\Delta C'(n+x) = g(z,x)\ C'(n)$$

where $g(z,x)$ is the response of a predictive filter corresponding to a future ranking $x$, $x$ being the delay taken by the transmitter to take account of the said control signal.

4. Method according to Claim 3, **characterised in that** the said response is given by a polynomial of order 2, for example:

$$g(z,x) = (x^2+3x)/2 - (x^2+2x)\ z^{-1} + (x^2+x)z^{-2}/2$$

5. Method according to one of Claims 2 to 4, **characterised in that**, for determining the signal estimating the attenuation of the forward channel, it consists of using, on the one hand, the received power and, on the other hand, an estimate of the power emitted by the transmitter at the current instant.

6. Method according to Claim 5, **characterised in that**, for determining an estimate of the power emitted by the transmitter at the current instant, it consists of making an estimate of the control signal re-

8

ceived by the transmitter at the current instant, then of adding, to the estimate of the power emitted at the preceding instant, the said estimate of the control signal.

7. Method according to Claim 6, **characterised in that**, for determining the estimate of the control signal, it consists of delaying the control signal by a duration corresponding to the delay taken by the transmitter to take account of the said control signal.

8. Method according to one of the preceding claims, **characterised in that**, for determining the control signal, it also consists of determining the variation in the power control signal between the current instant and the instant at which a signal transmitted at the current instant is taken into account by the transmitter.

9. Method according to Claim 8, **characterised in that** it consists of determining the power control signal by a weighted sum of the static variation in received power, the dynamic power variation due to the forward channel and the variation in the power control signal.

10. Method according to Claim 9, **characterised in that** the weighting coefficients of the said weighted sum have values which depend on the transmission characteristics.

11. Method according to one of the preceding claims, **characterised in that** it consists of converting the value of the received power into its value in decibels, the various calculations then being made with values expressed in decibels.

FIG. 1

FIG.2

$$\text{FIG. 3}$$

**FIG. 4**